(19) Europäisches Patentamt

European Patent Office

Office européen des brevets

(11) **EP 1 263 116 A2**

(12) ## EUROPEAN PATENT APPLICATION

(43) Date of publication:
04.12.2002 Bulletin 2002/49

(51) Int Cl.7: **H02K 1/27**

(21) Application number: 02002059.0

(22) Date of filing: 08.02.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: 29.05.2001 JP 2001160676

(71) Applicant: **Hitachi, Ltd.**
**Chiyoda-ku, Tokyo 101-8010 (JP)**

(72) Inventors:
• **Kaneda, Junya**
**Naka-gun, Ibaraki 319-1115 (JP)**

• **Kitamura, Masashi**
**Mito-shi, Ibaraki 310-0842 (JP)**
• **Komuro, Matahiro**
**Hitachi-shi, Ibaraki 317-0076 (JP)**
• **Tomeoku, Hiroshi**
**Hitachi-shi, Ibaraki 319-1221 (JP)**
• **Ito, Motoya**
**Hitachinaka-shi, Ibaraki 312-0052 (JP)**

(74) Representative: **Beetz & Partner Patentanwälte**
**Steinsdorfstrasse 10**
**80538 München (DE)**

(54) **Dynamo electric machine with permanent magnet type rotor**

(57)    In a dynamo electric machine provided with a stator and a permanent magnet type rotor (2), on a circumferential surface of the rotor (2) p·n pieces of permanent magnet blocks (21) are disposed, herein p is number of poles of the rotor and n is an integer equal to or more than 2, and each of the permanent magnet blocks satisfies the following condition (1);

$$(\theta i)-(\theta i+1) = (Ai \cdot p/2) \qquad (1)$$

Wherein, when assuming that clockwise direction is plus, Ai is an angle formed between radial center lines of ith permanent magnet block and (i+1)th permanent magnet block, θi is an angle formed between magnetization direction of the ith permanent magnet block and the outward radial direction thereof, and θi+1 is an angle formed between magnetization direction of the (i+1)th permanent magnet block and the outward radial direction thereof.

*FIG. 1*

**Description**

BACKGROUND OF THE INVENTION

1. FIELD OF THE INVENTION

The present invention relates to a permanent magnet type dynamo electric machine with permanent magnets for the rotor thereof and, more specifically relates to a surface magnet type dynamo electric machine with permanent magnets arranged on the surface of the rotor. Further, the present invention also relates to a linear motor and an axial gap type dynamo electric machine formed according to the same structure.

2. CONVENTIONAL ART

Dynamo electric machines are classified in a variety of types according to such as structure, mechanism and control mode, and permanent magnet type dynamo electric machines which use permanent magnets for the rotor have been also manufactured. Among these permanent magnet type dynamo electric machines, a surface magnet type dynamo electric machine in which permanent magnets are arranged over the surface of the rotor is one which is manufactured in small size and shows a high efficiency.

K. Atallah et al. disclose in IEEE Transactions on Magnetics, pp.2060-2062, vol.34, No.4, 1998 that when a magnetization vector distribution proposed by K. Halback is applied to a cylindrical shaped magnet for a surface magnet type rotor, an ideal rotor with a large gap magnetic flux density and a sinusoidal magnetic flux density distribution can be constructed. Hereinbelow, a cylindrical shaped magnet having the ideal magnetization vector distribution will be called as ideal Halback magnet. However, such ideal Halback magnet can not practically be manufactured because of its magnetization vector distribution condition. Therefore, it is desired to obtain a cylindrical shaped magnet having magnetization distribution near to the ideal Halback magnet as much as possible.

One of such magnets is a polar anisotropic Halback magnet magnetized by a magnetic field having a distribution which reproduces a magnetic field generated by the ideal Halback magnet. As disclosed such as in K. Atallah et al., IEEE Transactions on Magnetics, pp. 2060-2062, vol.34, No.4, 1998 and in PCT International Publication No. WO97/37362, such polar anisotropic Halback magnet shows a nearly sinusoidal surface magnetic flux density distribution as well as shows an induced counter voltage of sinusoidal waveform, and further can increase torque of the dynamo electric machine.

However, such polar anisotropic Halback magnet includes such portions as having insufficient magnetizing amount and deviation from the magnetizing direction when compared with the ideal Halback magnet.

In particular, the portion having insufficient magnetization tends to be demagnetized by the armature magnetic field which is undesirable in view of the stability of the dynamo electric machine performance.

Further, in such polar anisotropic Halback magnet a cylindrical shaped magnet itself has to be oriented as well as magnetized in a condition near the magnetization vector distribution of the ideal Halback magnet, an extremely large magnetic field is required for the orientation and magnetization. Accordingly, it is difficult to manufacture a large size cylindrical shaped magnet except for a comparatively small size cylindrical shaped magnet.

Another magnet of a cylindrical shaped magnet having magnetization distribution near to the ideal Halback magnet is a segmented Halback magnet having an stepwise magnetization vector distribution obtained by one pole of the cylindrical shaped magnet into a plurality of magnet blocks and by successively rotating the magnetizing direction of the respective magnet blocks, as disclosed such as in E. Potenziani et al. Journal Applied Physics, pp.5986-5987, vol.64, No.10, 1988, and in M. Marinescu et al., IEEE Transactions on Magnetics, pp.1390-1393, vol.28, No.2, 1992. The surface magnetic flux density distribution of these magnets come near to a sinusoidal waveform in comparison with a radially oriented magnet, but contain higher harmonic components. However, since the orientation and magnetization can be performed for every magnet block, a portion having insufficient magnetization can be removed and a possibility of demagnetization can be suppressed low. In particular, according to the analysis by M. Marinescu et al., it is shown that if a magnet for one pole is divided into 3 or 4, a torque generated by a dynamo electric machine having 6 poles and 18 slots can be increased and a cogging torque thereof can be reduced.

In order to improve the characteristics of the dynamo electric machine, it is required to enhance the characteristics of the rotor as indicated above. However, since the characteristics of a dynamo electric machine are determined through combination of the rotor and the stator, it is necessary that the respective characteristics of the rotor and the stator are excellent and the combination thereof is proper.

SUMMARY OF THE INVENTION

Accordingly, an object of the present invention is to reduce size, increase efficiency and decrease cogging torque of a permanent magnet type dynamo electric machine.

According to one aspect of the present invention for achieving the above object, in a dynamo electric machine with a stator and a permanent magnet type rotor, on or near circumferential surface of the rotor facing the stator p·n pieces of permanent magnet blocks are disposed, herein p is number of poles of the rotor and n is an integer equal to or more than 2, and each of the permanent magnet blocks satisfies the following conditions (a) through (e);

$$(\theta_i)-(\theta_{i+1}) = \pm (A_i \cdot p/2) \quad (1)$$

Wherein, when assuming that clockwise direction is plus, $A_i$ is an angle formed between radial center lines of ith permanent magnet block and (i+1)th permanent magnet block,

$\theta_i$ is an angle formed between magnetization direction of the ith permanent magnet block and the outward radial direction thereof,
$\theta_{i+1}$ is an angle formed between magnetization direction of the (i+1)th permanent magnet block and the outward radial direction thereof, and
+ in $\pm$ is for the case of an inner rotor type dynamo electric machine and - in $\pm$ is for an outer type dynamo electric machine.

BRIEF DESCRIPTION OF THE DRAWINGS

Fig. 1 is a cross sectional view of an inner rotor permanent magnet type dynamo electric machine 10 to which the present invention is applied taken perpendicularly to the rotary shaft thereof;
Figs. 2A through 2D are diagrams showing examples of cross sectional configurations of magnet blocks 21;
Figs. 3A and 3B are views for explaining magnetization direction 21a in the magnet blocks 21;
Fig. 4 is another view for explaining magnetization direction 21a in the magnet blocks 21;
Fig. 5 is a graph showing a relationship between ratio m/p of salient pole number m of a stator and pole number p of a rotor in an 8 pole surface magnet type dynamo electric machine and teeth maximum magnetic flux density;
Fig. 6 is a graph showing a relationship between ratio m/p of salient pole number m of a stator and pole number p of a rotor in another 8 pole surface magnet type dynamo electric machine and teeth maximum magnetic flux density;
Figs. 7A through 7F are cross sectional views of 6 pole surface magnet type rotors having different segmented numbers per one pole taken perpendicularly to the rotary shafts thereof;
Fig. 8 is a diagram showing surface magnetic flux density distributions of 6 pole surface magnet type rotors having different segmented numbers per one pole;
Fig. 9 is a diagram showing higher harmonic wave component distributions in surface magnetic flux density distributions of 6 pole surface magnet type rotors having different segmented numbers per one pole;
Fig. 10 is a graph showing a relationship between ratio of magnet thickness t and rotor outer diameter r of 10 pole surface magnet type rotors having different segmented numbers per one pole, and fundamental wave component in surface magnetic flux density;
Fig. 11 is a graph showing cogging torque relative values of dynamo electric machines having different segmented numbers per one pole;
Fig. 12 is a graph showing cogging torque increasing rate with respect to magnetization error;
Fig. 13 is a cross sectional view of a rotor 2 covered by a thin metallic cylindrical tube 4 taken perpendicularly to the rotary shaft thereof;
Figs. 14A and 14B are views showing examples of cross sectional configurations of a magnet binding member 25 taken perpendicularly to the rotary shaft thereof;
Figs. 15A and 15B are views showing examples of cross sectional configurations of a rotor 2 taken perpendicularly to the rotary shaft thereof;
Figs. 16A and 16B are views showing examples of cross sectional configurations of a magnet binding member 25 taken perpendicularly to the rotary shaft thereof;
Figs. 17A and 17B are views showing examples of cross sectional configurations of rotors 2 taken perpendicularly to the rotary shafts thereof;
Figs. 18A and 18B are views showing examples of cross sectional configurations of other rotors 2 taken perpendicularly to the rotary shafts thereof;
Figs. 19A and 19B are views showing examples of cross sectional configurations of still other rotors 2 taken perpendicularly to the rotary shafts thereof; and
Fig. 20 is a cross sectional view of an outer rotor permanent magnet type dynamo electric machine 10 to which the present invention is applied taken perpendicularly to the rotary shaft thereof.

EMBODIMENTS OF THE INVENTION

Hereinbelow, embodiments of the present invention will be explained with reference to the drawings.

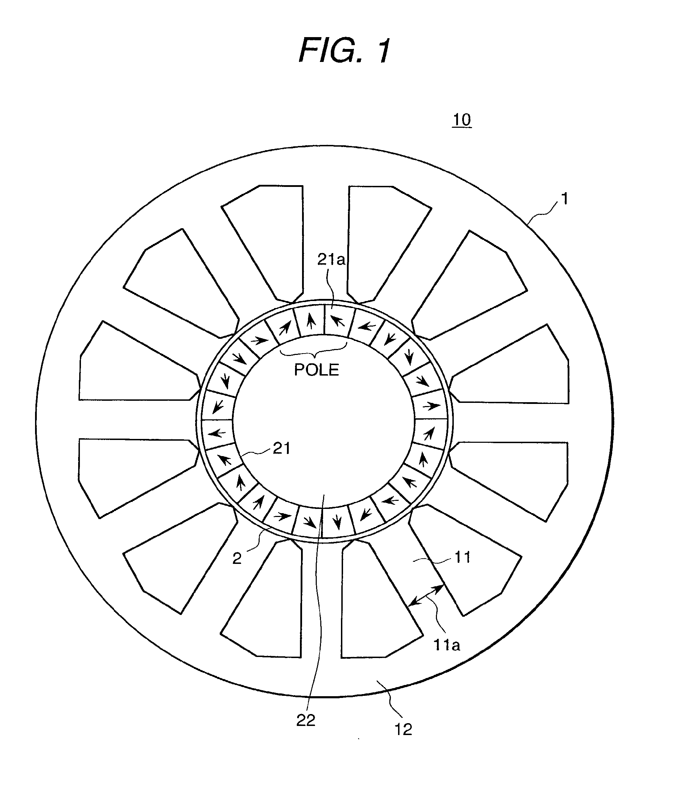

Fig. 1 shows a cross sectional structure taken in perpendicular to the rotary axis of an inner rotor permanent magnet type dynamo electric machine 10 representing a first embodiment of the present invention. The dynamo electric machine 10 includes a stator 1 and a rotor 2.
The stator 1 is provided with a number of 12 salient poles, in that number of 12 slots, and to which are applied concentrated type windings (not shown). Teeth 11 and a core back 12 in the stator 1 are respectively formed by laminating electromagnetic steel plates, and after applying the concentrated type windings into the teeth 11 and inserting the same into the core back 12, the stator 1 is completed. The rotor 2 is disposed inside the stator 1 so as to permit rotation around the rotary axis while being supported by bearings (not shown). The bearings are supported by end brackets (not shown), and through fixing the end brackets and a housing (not shown) surrounding the stator 1 the dynamo electric machine 10 is constituted.

The rotor 2 is provided with a rotor shaft 22 and magnet blocks 21 (reference numeral is only given to one of them) arranged around the same. The rotor shaft 22 is preferably made of ferromagnetic material, for example, iron. However, the rotor shaft 22 is not necessarily made of ferromagnetic material. Namely, as in the present embodiment, in that in the case of inner rotor type, since the leakage of magnetic flux toward the inside of the magnet is small, a rotor shaft is not required to be an iron core serving as a yoke, therefore, even if the rotor shaft is made of non-magnetic material, the rotor shaft can serve for maintaining a mechanical strength although slightly reducing the surface magnetic flux density.

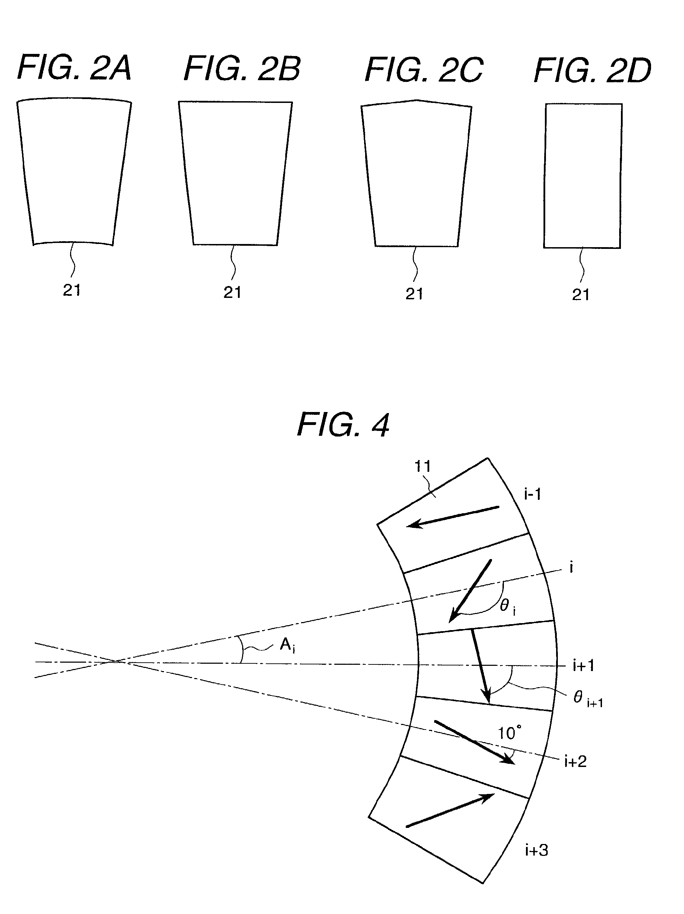

Each of the magnet blocks 21 is a permanent magnet and of which magnetizing direction is oriented in one direction as shown by an arrow 21a. Fig. 2 shows examples of configurations of the magnet block 21. In Figs. 2A through 2D, cross sectional shapes of the magnet blocks 21 taken on a generally cylindrical shaped magnet along the radial direction thereof are shown. Fig. 2A shows an arcuate shape, Fig. 2B a trapezoidal shape, Fig. 2C a polygonal shape and Fig. 2D a triangular shape. As the magnet blocks 21, the arcuate type magnet blocks, as shown in Fig. 2A and arranged according to the condition on the magnetizing direction as defined in equation (1) which will be explained later, is most preferable. However, other than the arcuate type magnet blocks, if the magnetizing direction distribution satisfies the equation (1), the trapezoidal, polygonal or triangular shape magnet blocks such as shown in Figs. 2B through 2D are acceptable. Further, if the magnetizing direction distribution determined by the respective magnet blocks satisfies the equation (1), it is unnecessary that the respective magnet blocks are not equally segmented.

In the rotor 2 according to the present embodiment, one pole is constituted by three magnet blocks 21. The rotor 2 shown in Fig. 1 is an 8 pole surface magnet type rotor. The magnet blocks 21 are directly pasted on the rotor shaft 22. The mutual magnet blocks 21, and the respective magnet blocks 21 and the rotor shaft 22 are bonded by an epoxy series adhesive and are secured each other. In order to increase magnetic flux density on the magnet surface, the thinner is the adhesive layer the better, on the other hand in order to ensure an bonding strength, it is necessary to provide a correspondingly thick adhesive layer. Accordingly, it is necessary to provide an adhesive layer corresponding to a predetermined bonding strength which is required depending on such as configuration and size of the rotor, configuration and size of the magnet and the material thereof.

As the magnet used for the magnet blocks 21 any of ferrite series bonded and sintered magnets, Nd-FeB series bonded and sintered magnets, Sm-Co series sintered magnet and SmFeN series bonded magnet can be used. However, since each of the magnet blocks 21 is magnetized in the direction parallel with the direction shown by the arrow 21a, it is preferable in view of such as magnet performance and magnetizing performance to use oriented magnets, in that a variety of sintered magnets and anisotropic bonded magnets. In particular, since it is concerned that the segmented Halback magnets such as the present embodiment tend to be demagnetized due to counter magnetic field, magnets having a large coercive force are preferable, especially the Nd-FeB sintered magnets are most preferable. Further, it is not necessarily required that the adjacent magnet blocks are closely bonded each other and a spacer can be inserted therebetween. The spacer can be either non-magnetic material or ferromagnetic material, however, a ferromagnetic material having a larger saturation magnetic flux density than the remnant magnetic field density of the magnets is preferable.

Further, the magnetizing vectors of the respective magnet blocks 21 are measured and determined by making use of a VSM (a sample vibration type magnetometer). Namely, after obtaining a calibration coefficient due to configuration by making use of a Ni sample having the same configuration as the magnet block, the magnetization of the magnet block is measured while varying the magnetic field direction of the VSM and the attachment direction of the magnet block. The direction which exhibits the maximum measured magnetization is the magnetizing direction. Further, the amount obtained by dividing the magnetization by the volume represents the magnetization amount.

It is determined that the magnet blocks used for an experiment which was performed for the following explanation do not require any calibration due to the configuration thereof according to the measurement result of the Ni sample. Further, the magnetization direction of all of the magnet blocks fell in a range of ±2° with respect to their designed directions. Still further, variation of the magnetization amount was within ±3%. If an absolute value of the difference (an error of the magnetization vector) between the ideal magnetization vector and the actual magnetization vector is less than 20% of the absolute value from the ideal magnetization vector, the magnetization state of the magnet blocks can be acceptable.

With regard to the segmented Halback magnets according to the present embodiment, if the respective magnet blocks are sufficiently magnetized, a characteristic as designed can be obtained. However, with this method, respective magnetized magnets have to be arranged in an annular form. For this reason, as a further easy manufacturing method, there is a method in which after arranging non-magnetized magnet blocks in a predetermined form, the magnet blocks are magnetized. Still further, after bonding the non-magnetized magnet blocks, the magnet blocks can be magnetized. With these alternatives, it sometimes happens insufficient magnetization depending on magnetization direction, however, if the error falls within the above acceptable range, a predetermined performance can be obtained.

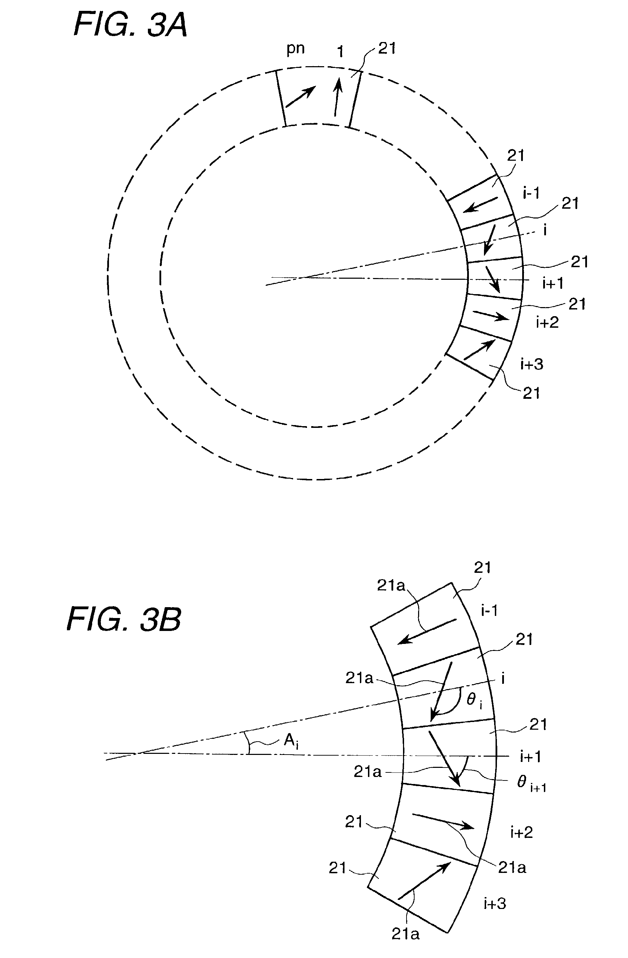

Now, the magnetization direction 21a of the magnet blocks 21 will be explained with reference to Figs. 3A and 3B. Figs. 3A and 3B show an arrangement of the magnet blocks 21 in which number of poles of the rotor is assumed as p and each of the poles is constituted by n pieces of magnet blocks 21.

In the present embodiment, when it is assumed that clockwise direction is plus, Ai is an angle formed between radial center lines of ith permanent magnet block 21 and (i+1)th permanent magnet block 21, θi is an angle formed between magnetization direction 21a of the ith permanent magnet block 21 and the outward radial direction thereof, and θi+1 is an angle formed between magnetization direction 21a of the (i+1) th permanent magnet block 21 and the outward radial direction thereof, the following condition is satisfied.

$$(\theta i) - (\theta i + 1) = (Ai \cdot p/2) \qquad (1)$$

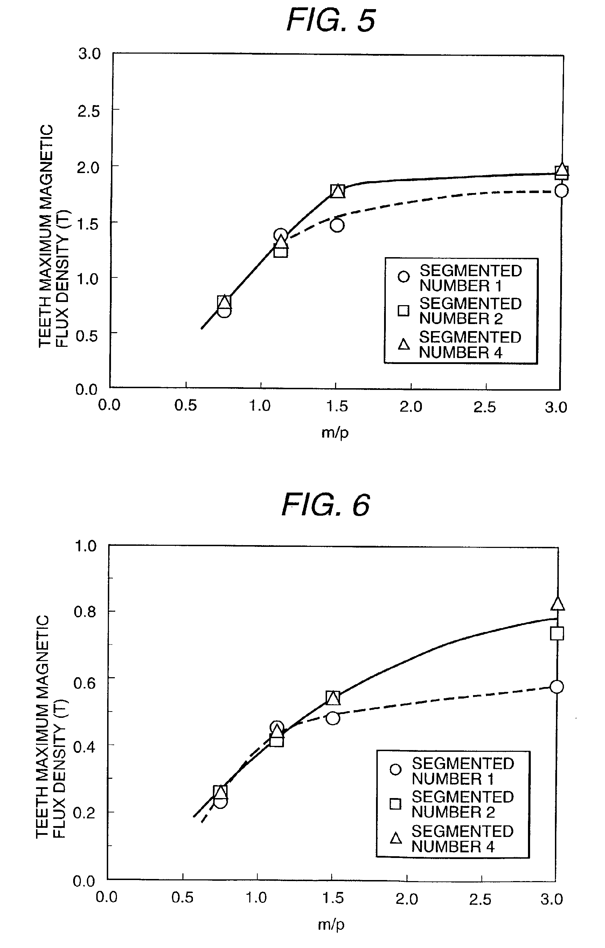

With regard to the magnetization directions of the magnet blocks, any direction can be determined as reference so long as the equation (1) stands between adjacent magnet blocks. This implies that, for example, even if either a magnet block having magnetizing direction in the radial direction as shown in Fig. 3B or a magnet block having magnetizing direction inclined by 10° with respect to the radial direction as shown in Fig. 4 is used as reference, substantially the same characteristic can be obtained.

Further, if after dividing a cylindrical shaped magnet into a plurality of portions along the axial direction through perpendicular planes thereto, the respective divided portions are offset by a proper skew angle, cogging torque of the dynamo electric machine can be reduced.

On each of the teeth 11 of the stator 1, other than the concentration winding a search coil (not shown) which measures the magnetic flux flowing in the concerned teeth 11 is wound. The maximum magnetic flux density is determined from the induced voltage in the search coil when the rotor 2 is rotated, of which result is shown in Fig. 5.

Number of poles p of the rotor 2 used in this experiment was 8 for all rotors and the segmented numbers for one pole were 1, 2 and 4. For the magnet block of segmented number 1 one magnet magnetized in parallel with a radial direction was used instead of radial magnetization. Further, stators having salient pole number m of 6, 9, 12 and 24 were used. Accordingly, ratios m/p of number of salient poles m of the stator and number of poles p of the rotor were respectively 0.75, 1.125, 1.5 and 3.0. Material having saturation magnetic flux density of 1.9T was used for the stator core.

As will be seen from Fig. 5, the maximum magnetic flux density of the teeth increases as the ratio m/p increases and comes close to the saturation magnetic flux density of the core material. In the case of one segment for one pole (no segmentation), namely, radial magnetization, even if the ratio m/p increases, no saturation magnetic flux density is reached, however, if segmented more than 1, the saturation magnetic flux density has been reached substantially when the ratio m/p is 1.5, and after exceeding m/p=1.5 no substantial increase of the magnetic flux density can be observed because of the saturation. As will be apparent from Fig. 5, through the use of segmented Halback magnets according to the present invention in which a cylindrical shaped surface magnet of a rotor is segmented into a plurality of blocks for each pole, the magnetic flux density in the stator teeth which locate at high surface magnetic flux density of the rotor is enhanced, and depending on their conditions the magnetic flux density thereof will be saturated. Such tendency becomes remarkable as the segmented number and the ratio m/p increase. Accordingly, for the segmented Halback magnet rotor it is preferable that the ratio m/p is less than 1.5.

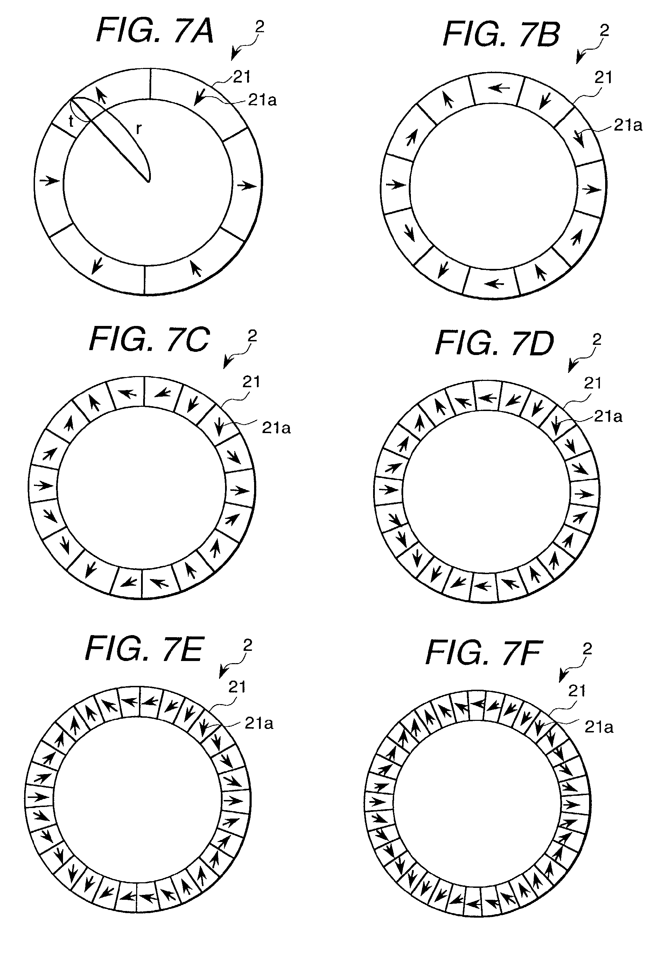

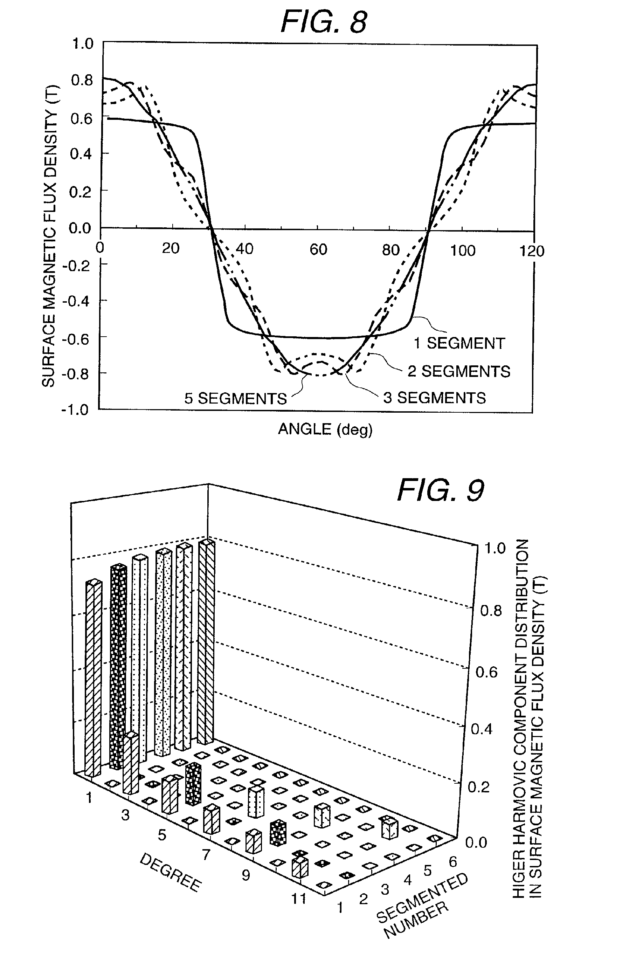

Subsequently, in order to measure difference in surface magnetic flux density distribution of rotors depending on segmented number per one pole, magnetic flux density was measured by making use of 6 pole surface magnet type rotors having different segmented numbers as shown in Figs. 7A through 7F. Namely, Figs. 7A through 7F show rotors 2 which are respectively constituted by 1 through 6 pieces of magnet blocks 21 (only one reference numeral is indicated for respective drawings ) per one pole. The arrows 21a (only one reference numeral is indicated for respective drawings) show orientation of respective magnet blocks 21 and their magnetization directions. In the present embodiment, NdFeB series sintered magnets were used for the magnet blocks 21. Further, thickness ratio t/r between thickness t in radial direction of the magnet block 21 and outer diameter (including the thickness of the magnet block) r of the rotor 2 is determined as 0.4. The surface magnetic flux density distribution of thus constituted surface magnet type rotors was measured by making use of a hall element having an active region diameter of 1mm. The result of the measurement is shown in Fig. 8 in which the surface magnetic flux densities over 120° corresponding to a pair of poles are illustrated.

As will be apparent from the illustration, although the surface magnetic flux density distribution for one segmentation (non-segmented) shows a rectangular waveform, the other distributions assume waveforms approximating to sinusoidal waveforms as the segmented number increases.

Therefore, stator teeth 11 which locate at portions showing high surface magnetic flux density of the rotor 2 are placed in a condition likely to be magnetically saturated. When the teeth 11 are magnetically saturated, cogging torque will be generated. In such instance, if the circumferential width of the teeth 11 is broaden to lower the magnetic flux density, cogging torque can be suppressed. However, since the windings are provided in the stator slots and the torque is also determined by the current supplied to the windings, if it is designed in the above manner that the teeth are broadened and the slots are narrowed, necessary windings can not be applied and a predetermined dynamo electric machine characteristic can not be obtained.

In view of the above, the inventors found out that it is a preferable structure of the stator for the segmented Halback magnet type rotor to limit the number of teeth 11 per one pole and broaden the width of the teeth 11. Namely, if the number of salient poles m of the stator per one pole of the rotor is determined according to the following inequation (2), the above condition is satisfied.

$$m/p \leq 1.5 \qquad (2)$$

Under the condition of the inequation (2), the winding can be wound in a concentrated winding. In the concentrated winding the number of salient poles equals the number of coils and the winding work of the concentrated windings is simple and easy when comparing to a distributed winding. Further, by employing a divided core in which the teeth and the core back are divided, the divided core can be assembled after applying the concentrated winding on the teeth, the space factor of the winding can be increased and magnetic loading can be enhanced, thereby, the size of the dynamo electric machine can be reduced. In such instance the value of m/p is determined to be more than 0.75 and less than 1.5. If such condition is not fulfilled, the width of the slot opening portion has to be broadened for the concentrated windings and further, because of too many number of slots, the total width of the slot opening portions over the entire circumference has to be broadened. In association therewith, the cogging torque will increases. Therefore, the value of m/p is further preferable in a range more than 0.75 and less than 1.5.

Since in the dynamo electric machine as shown in Fig. 1, m=12 and p=8, the condition expressed by inequation (2) is satisfied. The surface magnetic flux density distribution of the surface magnet type rotor satisfying the above condition further approximates to a sinusoidal waveform, when compared with a rotor using the radially magnetized magnets made of the magnet material having the same characteristics, which will be explained later. Further, the fundamental wave component in the surface magnetic flux distribution of the present embodiment shows a larger value than that formed by the radial magnetization.

Fig. 9 shows a result of waveform analysis performed on the magnetic flux density distribution waveforms as shown in Fig. 8. Fig. 9 shows intensities of higher harmonic components contained in the surface magnetic flux density distribution in accordance with the segmented number. From Fig. 9, it will be understood that the primary fundamental wave component increases as the segmented number increases. Accordingly, it is considered that a larger torque can be generated as the segmented number increases. Further, it is understood that the higher harmonic components moves to higher degree and the total higher harmonic components decrease as the segmented number increases. As a result, it is considered that an increase of the segmented number will contribute to reduce the cogging torque.

In the ideal Halback magnet, it has been known that the maximum surface magnetic flux density increases as the magnet is thickened. However, such was not a certained for the segmented Halback magnet. Therefore, with regard to 10 pole segmented Halback magnets disposed on a rotor, the surface magnetic flux density distribution thereof was measured with a hall element and the fundamental wave component was calculated through waveform analysis in the distribution. The segmented numbers of the segmented Halback magnets used are 1, 2 and 4. One segmentation is the parallel magnetization in radial direction.

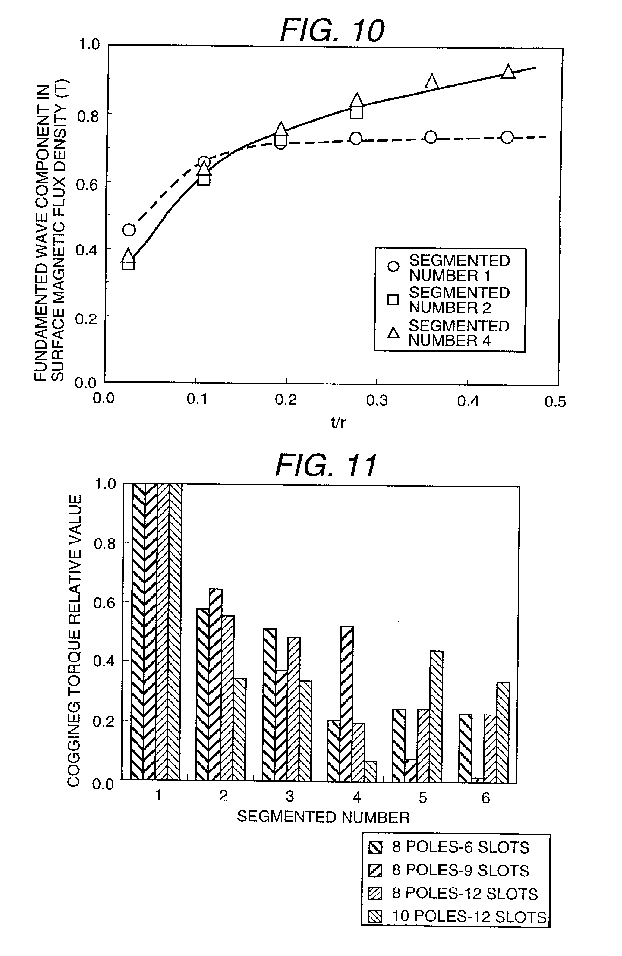

Fig. 10 shows the resultant fundamental waveform component in the surface magnetic flux density with respect to t/r. As will be apparent from Fig. 10, with regard to one segmentation the fundamental wave component saturates at a border of 0.15 even if t/r is increased. With regard to segmented number of more than 1, the fundamental wave component in the surface magnetic flux density increases as the value t/r increases. The fundamental wave component for the segmented number of more than 1 exceeds that of one segmentation magnet when the value of t/r is more than 0.15.

Even when the value of t/r is less than 0.15, if the rotor is provided with the magnetization vector distribution according to the present invention, the surface magnetic flux density distribution shows a sinusoidal waveform, the advantage with regard to the dynamo electric machine characteristics can be enjoyed. However, when the magnet thickness is in a range which satisfies the above condition (t/r is more than 0.15), the fundamental wave component in the surface magnetic flux density can be increased in comparison with that of the radial magnetization magnet, and the torque generation can be increased. Further, when the magnet thickness is thin, demagnetization tends to be caused due to the magnetic field formed by the armature. For the above reason, the ratio t/r of the permanent magnet thickness t with respect to the rotor diameter r nearest to the stator is preferable to be more than 0.15, and more preferably to be more than 0.2.

Since the fundamental wave component in the surface magnetic flux density can be increased as the magnet thickness is increased, if the segmented number per one pole is more than 1, thereby, a large torque can be generated. If the segmented number is more than 2, the above advantage is further enhanced, and the surface magnetic flux density distribution approximates to a sinusoidal waveform and the higher harmonic components therein move to high degree, which are desirable for a dynamo electric machine. Further, if the segmented number is more than 4, reduction of cogging torque can be expected, which is further preferable. However, the cogging torque does not monotonously decrease depending on increase of the segmented number, but if a proper segmented number for a value of m/p is selected, the cogging torque can be reduced very small. Even in the rotor according to the present invention an application of a skew to the surface magnets is effective for reducing cogging torque. Such application can be easily carried out by a skew in which the magnet blocks are divided along the axial direction into a plurality of portions and the respective divided portions are offset by a predetermined angle.

Subsequently, with regard to four kinds of dynamo electric machines, in that 8 poles 6 slots, 8 poles 9 slots, 8 poles 12 slots and 10 poles 12 slots dynamo electric machines, cogging torques were compared when varying the segmented number per one pole of the surface magnets on the rotor from 1 to 6. The respective cogging torques are shown in relative values when the cogging torque of one segmentation (non-segmentation) is assumed as 1. Herein the one segmentation is the parallel magnetization in radial direction. Fig. 11 shows the comparison result.

As will be apparent from Fig. 11, the cogging torques can be lowered for the segmented number of more than 1 in comparison with that of one segmentation. Further, it was found out that if rotor pole number and stator salient pole number are properly combined, there is an optimum segmented number which further reduces the cogging torque. According to the present embodiment, with respect to the 8 poles 6 slots and 8 poles 12 slots dynamo electric machines the cogging torques are reduced for the segmented number more than 3 in comparison with the segmented number upto more than 2, and among these the segmented number of 4 showed the minimum cogging torque. With respect to 8 poles 9 slots dynamo electric machine, the cogging torques are extremely reduced for the segmented number of more than 4. With respect to 10 poles 12 slots dynamo electric machine, the segmented number of 2 showed a small cogging torque in comparison with other combinations and the segmented number of 5 showed a comparatively large cogging torque. However, the segmented number of 4 showed an extremely small cogging torque.

As will be apparent from the above, the cogging torques for the segmented number of more than 1 can be lowered in comparison with the radial magnetization. However, the cogging torque does not monotonously decrease depending on the increase of the segmented number and in order to minimize the cogging torque for respective combinations of the number of poles and the number of slots there is a proper segmentation number.

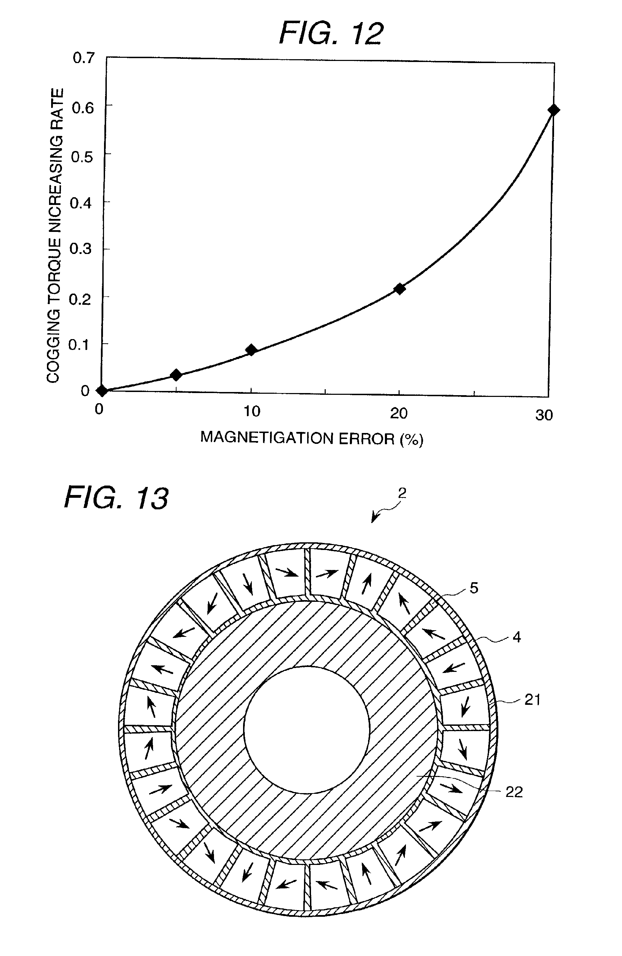

When there is a magnetization error in a magnet block, it is possible that the cogging torque increases. Therefore, with respect to the 10 poles 12 slots dynamo electric machine the cogging torque was evaluated by varying the magnetization direction of one of magnet blocks of which magnetization direction is set in the radial direction among the magnet blocks segmented into 3 per one pole. The magnet blocks other than the above one particular magnet block were magnetized in the same degree of accuracy as in the first embodiment. Herein, magnetization error (%) is defined as (absolute value of the difference between designed magnetization vector and measured magnetization vector) / (absolute value of the designed magnetization vector) $\times$ 100. The measurement of the magnetization vector was performed in the like manner as in the first embodiment by making use of the VSM. Fig. 12 shows the measurement result.

From Fig. 12, it is seen that the cogging torque increases as the magnetizing error increases. In particular, if the magnetization error reaches 30%, the cogging torque increases significantly. When there is a same degree of magnetization error for all of the magnet blocks, it is predicted that the cogging torque in total assumes a value determined by multiplying a coefficient $\sqrt{N}$ (wherein N is number of magnet blocks). Herein, because of 10 poles and 3 segmentation, the number of magnet blocks is 30, therefore, the coefficient assumes $\sqrt{30} \fallingdotseq 5.5$. When assumed that there is a same degree of magnetization error for all of the magnet blocks, and in order to suppress the cogging torque increasing rate at about 1.0, it is desired that the cogging torque increasing rate due to magnetization error of one magnet block as shown in Fig. 12 is about $1.0/\sqrt{N} = 0.2$. Accordingly, it is desirable that the magnetization error is less than 20%.

Now, another embodiment of the rotor 2 which can be used in the dynamo electric machine 10 is shown. When the rotor 2 rotates in high speed, since a large centrifugal force acts on the magnet blocks aligned on the surface of the rotor shaft, it is preferable to cover the outer circumference of the magnets constituted in cylindrical shape with a thin metallic cylindrical tube or to wind around the same with a reinforcing tape. Therefore, for the dynamo electric machine according to the present invention it is preferable to use a rotor 2 as shown in Fig. 13.

Fig. 13 shows a cross sectional view of the rotor 2 taken perpendicularly to the rotary shaft thereof in which the magnet blocks 21 are bonded on the surface of the rotor shaft 22 via an adhesive and a thin metallic cylindrical tube 4 is covered over the outer circumference thereof. The thin metallic cylindrical tube 4 can be either ferromagnetic or non-magnetic. In the case of ferromagnetic cylindrical tube, the magnetic flux density on the surface of the rotor 2 does not reduce much and high harmonic components therein can be reduced. Thereby, the cogging torque can be reduced without lowering torque generation. However, an iron loss will be caused. On the other hand, in the case of non-magnetic cylindrical tube, the tube can be treated substantially as equivalent to a gap. However, an eddy current loss will be caused.

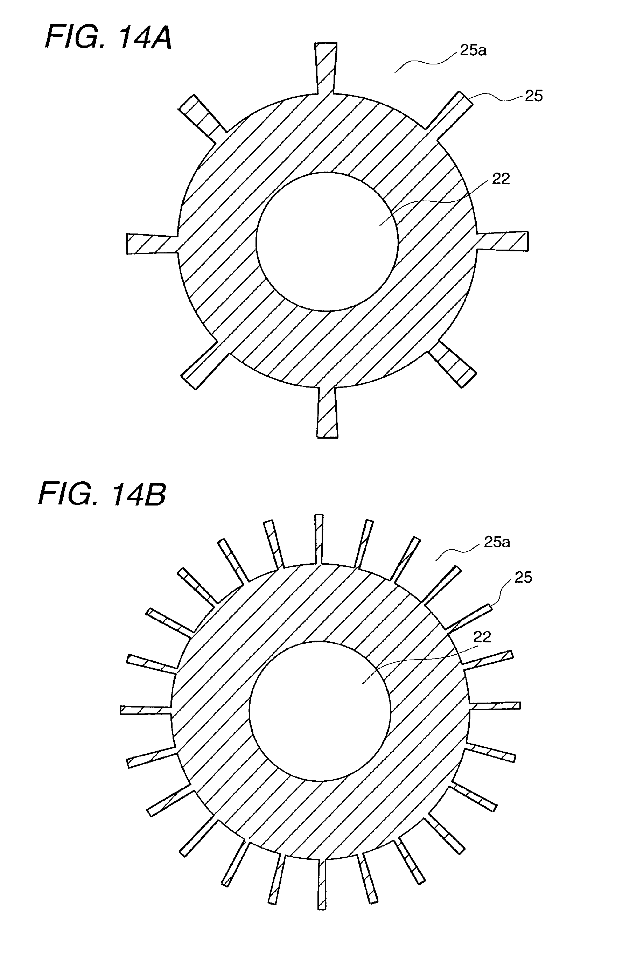

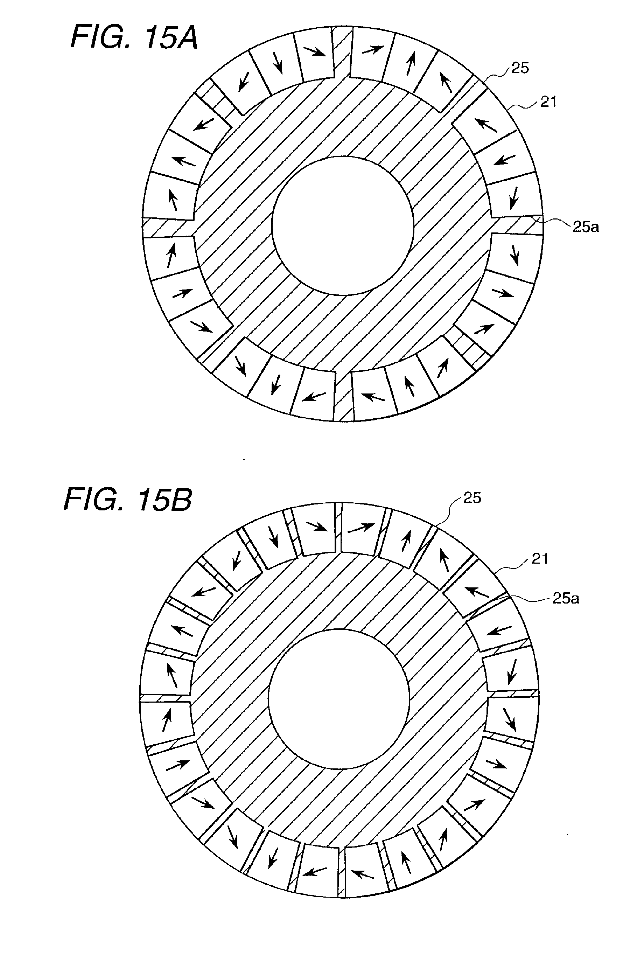

Now, other embodiments of a rotor 2 which can be used for the dynamo electric machine 10 are shown. Figs. 14A through 19B show cross sectional views of the rotor 2 taken perpendicularly to the rotary axis direction. Magnet binding members 25 arranged around the rotor shaft 22 as shown in Figs. 14A and 14B are prepared for forming 8 pole rotor and are provided with grooves 25a for receiving and binding the magnet blocks. In an example as shown in Fig. 14A, 8 grooves 25a each can receive 3 magnet blocks are provided. In an example as shown in Fig. 14B, 24 grooves 25a each can receive one magnet block are provided. Figs. 15A and 15B show states in which the respective magnet blocks have been received by the magnet binding members 25.

By constructing the magnet blocks as shown in Figs. 15A and 15B, a possible scattering of the magnet blocks due to mutual repulsion force thereof can be suppressed. In particular, with the structure as shown in Fig. 15A, the three magnet blocks in one groove 25a attract each other to thereby stabilize.

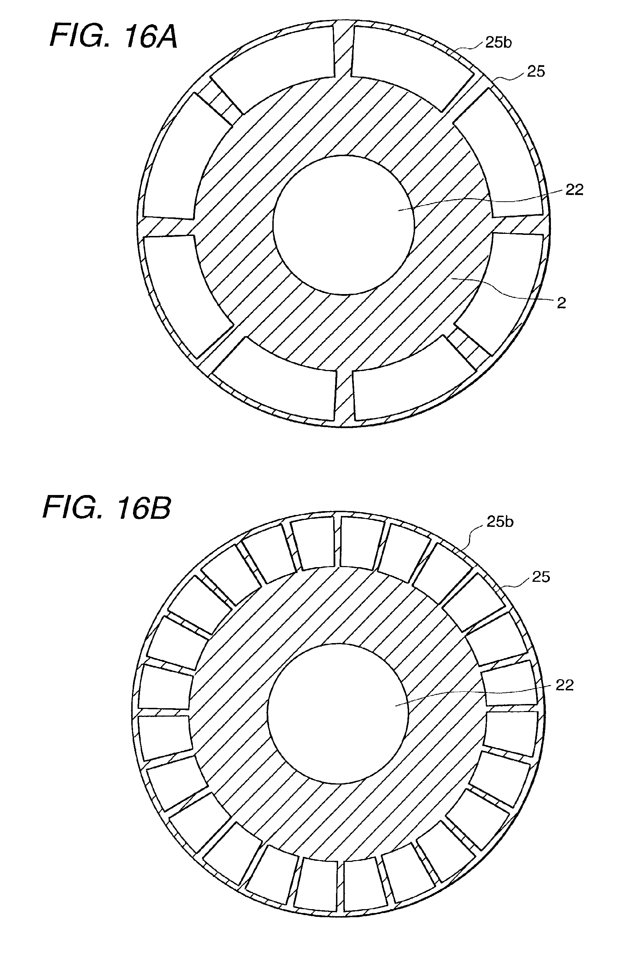

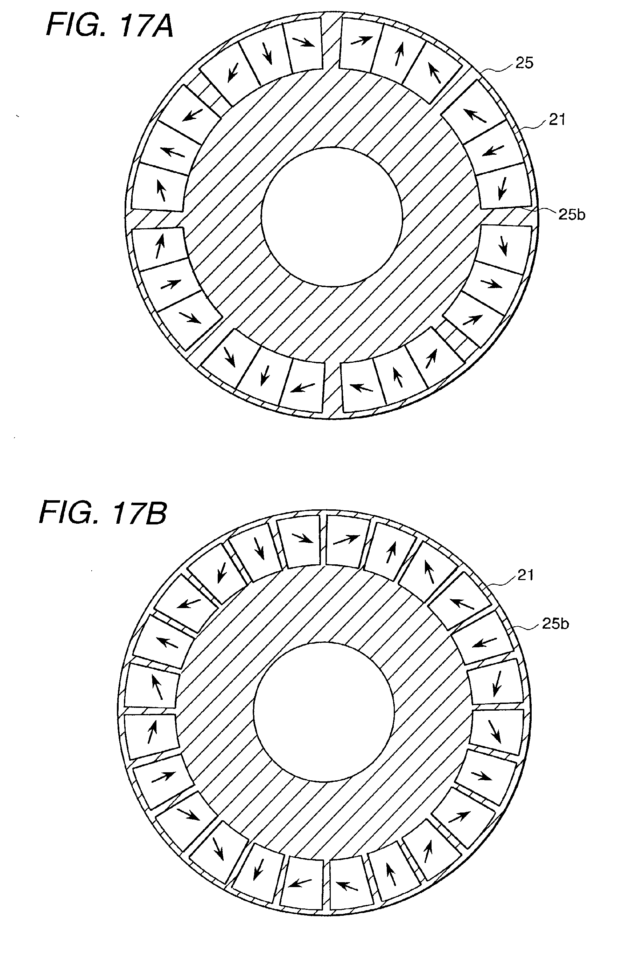

Further, the magnet binding member 25 as shown in Figs. 16A and 16B are also for forming an 8 pole rotor. The magnet binding member 25 shown herein is provided with holes 25b for receiving and binding the magnet blocks. In an example as shown in Fig. 16A, 8 holes 25b each of which can receive 3 magnet blocks are provided. In an example as shown in Fig. 16B, 24 holes 25b each of which can receive one magnet block are provided. Figs. 17A and 17B show states when the magnet blocks 21 are respectively received.

With the structures as shown in Figs. 17A and 17B, a possible dispersion of the magnet blocks due to mutual repulsive force thereof can be suppressed better than the examples as shown in Figs. 15A and 15B. In particular, with the structure as shown in Fig. 17A the 3 magnets within each hole 25b attract each other and stabilize.

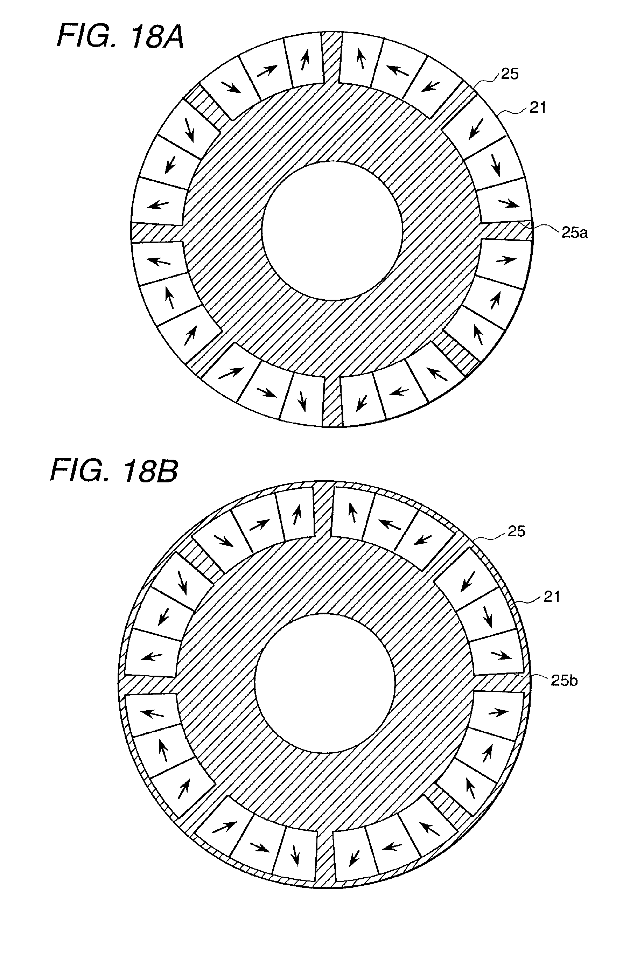

Further, Fig. 18A shows another embodiment in which the magnet blocks 21 are received in the magnet binding members 25 as shown in Fig. 15A, and Fig. 18B shows still another embodiment in which the magnet blocks 21 are received in the magnet binding members 25 as shown in Fig. 17A.

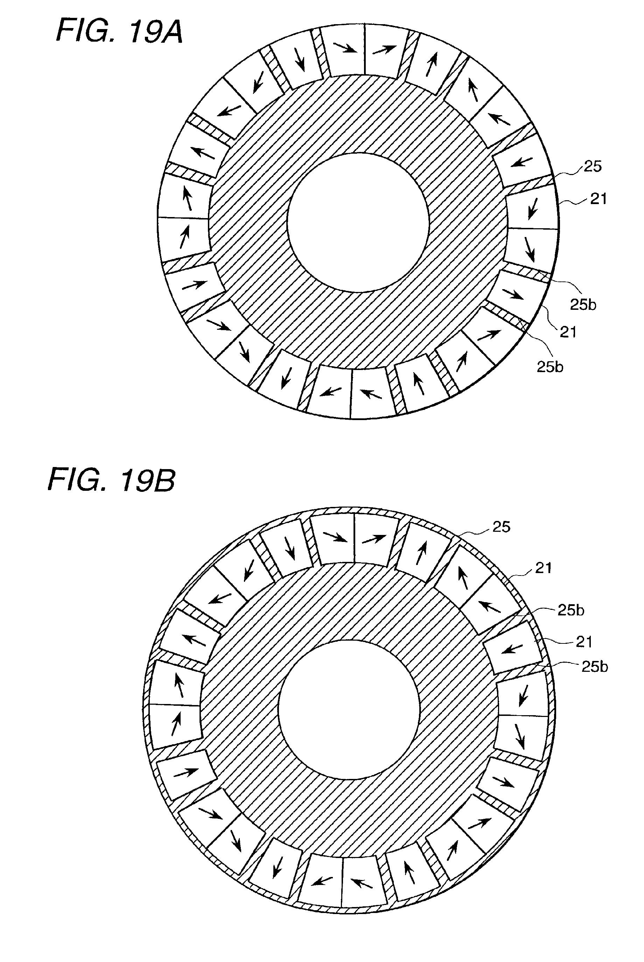

Figs. 19A and 19B show modifications of magnet binding members 25 as shown in Figs. 14A and 14B or Figs. 16A and 16B. Namely, in each of the magnet binding members 25 as shown in Fig. 19A, a groove 25a for receiving 2 magnet blocks and another groove 25a for receiving one magnet block are alternatively arranged. In each of the magnet binding members 25 as shown in Fig. 19B, a hole 25b for receiving 2 magnet blocks and another hole 25b for receiving one magnet block are alternatively arranged. Thereby, the magnet blocks 21 received in the respective groove 25a or holes 25b attract each other and stabilize.

Now, a second embodiment will be shown. In the present embodiment the configuration of the rotor 2 is the same as shown in Fig. 1, however, the magnet blocks 21 are constituted by ferrite series sintered magnets. The configuration, orientation and magnetizing direction of the respective magnet blocks are the same as those of the first embodiment. By making use of the present embodiment, the magnetic flux density measurement like the first embodiment was performed. Fig. 6 shows the measurement result.

According to the measurement result, with the ferrite series sintered magnets it is observed that in the measurement range no magnetic flux saturation is caused at the stator teeth. Further, as will be apparent from Fig. 6, with respect to segmented number 1 the teeth maximum magnetic flux density increases a little even if the value m/p increases. On the other hand, with respect to segmented number of more than 1, the teeth maximum magnetic flux density increases as the value m/p increases. In this instance, since the remnant magnetic flux density of ferrite series sintered magnets is small, no magnetic flux saturation is reached at the teeth. However, if the size of the rotor is intended to be reduced further, the teeth magnetic flux density increases and it is possible that magnetic flux saturation is reached. In particular, it is considered that when the value m/p exceeds over 1.5, the difference between the teeth magnetic flux densities for one segmentation and more than 1 segmentation increases. Accordingly, the smaller the teeth maximum magnetic flux density is, the better as well as the smaller value of m/p is preferable. In the present invention, the value of m/p less than 1.5 is likely preferable.

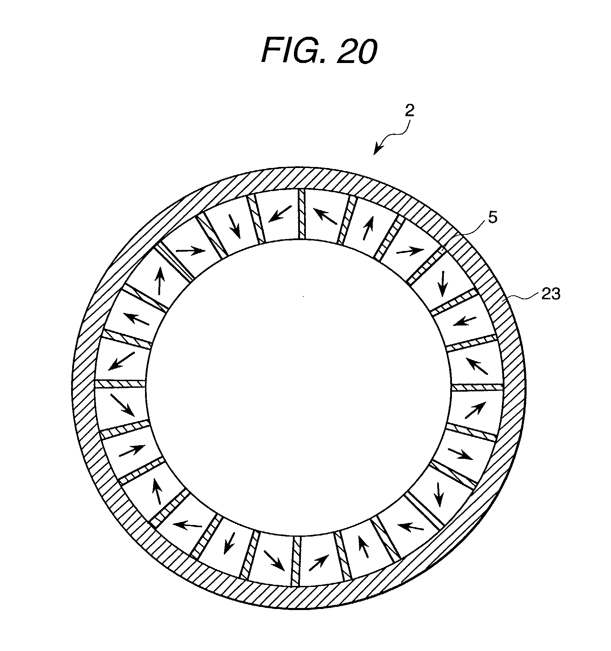

Further, in the above explanation, inner rotor type dynamo electric machine and rotors used therefor have been explained. However, the present invention is also applicable to outer rotor type dynamo electric machines. Fig. 20 shows a cross sectional view of an outer rotor type rotor 2 taken perpendicular to the rotary shaft. The rotor 2 is constituted by bonding the magnet blocks 21 via an adhesive along the inner side of a rotor ring 23. In case of the outer rotor type dynamo electric machine, the equation (1) is modified as follows;

$$(\theta i) - (\theta i+1) = -(A i \cdot p / 2) \qquad (1')$$

According to the present invention, the efficiency of permanent magnet type dynamo electric machine can be enhanced while reducing size and cogging torque thereof.

**Claims**

1.  In a dynamo electric machine (10) with a stator (1) and a permanent magnet type rotor (2), on or near circumferential surface of the rotor facing the stator p·n pieces of permanent magnet blocks (21) are disposed, herein p is number of poles of the rotor and n is an integer equal to or more than 2, and each of the permanent magnet blocks satisfies the following conditions;

$$(\theta i) - (\theta i+1) = \pm (Ai \cdot p/2) \qquad (1)$$

    wherein, when assuming that clockwise direction is plus, $Ai$ is an angle formed between radial center lines of ith permanent magnet block and (i+1)th permanent magnet block, $\theta i$ is an angle formed between magnetization direction of the ith permanent magnet block and the outward radial direction thereof, $\theta i+1$ is an angle formed between magnetization direction of the (i+1)th permanent magnet block and the outward radial direction thereof, and + in $\pm$ is for the case of an inner rotor type dynamo electric machine and - in $\pm$ is for an outer type dynamo electric machine.

2.  A dynamo electric machine of claim 1, wherein the stator includes m pieces of salient poles disposed with an equal interval and satisfies the following condition;

$$m/p \leq 1.5 \qquad (2)$$

3.  A dynamo electric machine of claim 1 or claim 2, wherein when assuming that the outer diameter of the rotor as r and the thickness of each permanent magnet as t, the dynamo electric machine satisfies the following condition;

$$t/r \geq 0.15 \qquad (3)$$

4.  A dynamo electric machine of any one of claims 1 through 3, wherein the rotor is provided with a binding portion (25, 25a, 25b) for binding the permanent magnet blocks (21) on or near the circumferential surface

5.  A dynamo electric machine of claim 4, wherein the binding portion is a groove provided on the circumferential surface of the rotor.

6.  A dynamo electric machine of claim 4, wherein the binding portion is an aperture provided near the circumferential surface of the rotor.

7.  A dynamo electric machine of any one of claims 1 through 6, wherein each permanent magnet block is a NdFeB sintered magnet.

# FIG. 1

# FIG. 2A

# FIG. 2B

# FIG. 2C

# FIG. 2D

21

21

21

21

# FIG. 4

11

i-1

i

$\theta_i$

$A_i$

i+1

$\theta_{i+1}$

10°

i+2

i+3

## FIG. 3A

## FIG. 3B

## FIG. 5

## FIG. 6

FIG. 7A

FIG. 7B

FIG. 7C

FIG. 7D

FIG. 7E

FIG. 7F

## FIG. 8

## FIG. 9

## FIG. 10

## FIG. 11

## FIG. 12

## FIG. 13

FIG. 14A

25a

25

22

FIG. 14B

25a

25

22

## FIG. 15A

## FIG. 15B

FIG. 16A

25b

25

22

2

FIG. 16B

25b

25

22

FIG. 17A

FIG. 17B

*FIG. 18A*

*FIG. 18B*

FIG. 19A

FIG. 19B

## FIG. 20